# EUROPÄISCHE PATENTSCHRIFT

(11) **EP 3 034 950 B1**
(45) Veröffentlichungstag und Bekanntmachung des Hinweises auf die Patenterteilung: **23.08.2017**
(21) Anmeldenummer: 15199712.9
(22) Anmeldetag: 14.12.2015
(51) Int. Cl.: F24C 15/16

(54) **VORRICHTUNG ZUR AUFLAGE VON GARGUTTRÄGERN**
DEVICE FOR SUPPORTING FOOD CARRIERS
DISPOSITIF POUR POSER DES SUPPORTS DE CUISSON

(30) Priorität: 15.12.2014 DE 202014106054 U
(43) Veröffentlichungstag der Anmeldung: 22.06.2016
(73) Patentinhaber: Grass GmbH, 6973 Höchst (AT)
(72) Erfinder: Huber, Franz, 5211 Lengau (AT)
(74) Vertreter: Otten, Roth, Dobler & Partner mbB Patentanwälte

(56) Entgegenhaltungen:
- WO-A1-2008/080923
- WO-A1-2014/048732
- DE-A1- 3 505 807
- DE-A1- 19 500 371
- DE-A1- 19 947 153
- GB-A- 2 246 855
- JP-U- S53 161 870
- US-A1- 2006 102 017

## Beschreibung

Die Erfindung betrifft eine Vorrichtung zur Auflage von Gargutträgern nach dem Anspruch 1 sowie einen Ofen.

Vorrichtungen zur Auflage von Gargutträgern in einem Ofen sind in den verschiedensten Ausführungen bekannt. Dabei stellen solche Vorrichtungen Trageinheiten zur Verfügung, auf denen ein Gargutträger, z.B. ein Backblech, z.B. auflegen oder z.B. einschieben lässt. Die Trageinheiten sind an einander gegenüberliegenden Seiten eines Backrohrs bzw. einer Backofenmuffel angebracht, wobei sich die Trageinheiten insbesondere paarweise in gleicher Höhe anordnen lassen, damit ein Gargutträger im Ofen horizontal ein- und ausschiebbar gelagert ist. Die Vorrichtung kann bekanntlich Anbringmittel umfassen, mit denen eine Trageinheit im Backofen, insbesondere an einem seitlichen, insbesondere vertikalen Wandabschnitt einer Ofenmuffel anbringbar ist.

Solche Vorrichtungen sind z.B. aus den Dokumente DE 35 05 807 A1, JP S53 161870 U, DE 195 00 371 A1, WO 2008/080923 A1 oder GB 2 246 855 A bekannt.

Der vorliegenden Erfindung liegt die Aufgabe zugrunde, eine verbesserte Vorrichtung zur Auflage von Gargutträgern bereitzustellen, die sich vergleichsweise einfach und sicher im Ofen anbringen lässt.

Die Aufgabe wird mit einer Vorrichtung zur Auflage von Gargutträgern mit den Merkmalen des Anspruchs 1 gelöst.

Bevorzugte und vorteilhafte Ausführungen der Erfindung werden in den Unteransprüchen aufgeführt.

Die Erfindung geht von einer Vorrichtung zur Auflage von Gargutträgern in einem Ofen mit mindestens einer Trageinheit zur Auflage eines Gargutträgers und mit Anbringmitteln, mit denen die Trageinheit im Ofen an einem senkrechten Wandabschnitt des Ofens anbringbar ist, aus. Der Kern der Erfindung besteht darin, dass die Anbringmittel ein Hakenelement umfassen, das von der Trageinheit seitlich abstehend und nach oben ragend ausgebildet ist, wobei das Hakenelement zum Einstecken durch eine Einstecköffnung am senkrechten Wandabschnitt mit einer abhebenden und zur Einstecköffnung hin einschwenkenden Bewegung vorgesehen ist, um auf einem unteren Randabschnitt der Einstecköffnung aufzuliegen. Der senkrechte Wandabschnitt ist vorzugsweise ein seitlicher, insbesondere an eine Zufuhröffnung angrenzender Wandabschnitt einer - z.B. rohrförmigen und z.B. topfförmigen - Ofenmuffel.

Die Trageinheit kann z.B. eine insbesondere nach innen offene U-förmige Profilschiene sein, in die sich ein Randbereich eines Gargutträgers hineinschieben und herausziehen lässt. Außerdem kann die Trageinheit eine Führungseinheit mit mehreren zueinander verschiebbar gelagerten Führungsschienen sein, wobei zwischen den Führungsschienen vorzugsweise Wälzkörper für eine erleichterte Beweglichkeit angeordnet sind. Die Führungseinheit kann z.B. als Teilauszug oder auch z.B. als Vollauszug, mit dem der Gargutträger vollständig aus einem Ofenraum herausfahrbar ist, ausgebildet sein.

Die Einstecköffnung kann am Wandabschnitt z.B. einer Ofenmuffel oder einer ähnlichen wandförmigen Verkleidung eines Ofenraums ausgenommen sein. Des Weiteren kann die Einstecköffnung an einem Flächenabschnitt eines Anbringelements der Anbringmittel ausgebildet sein, das seinerseits für eine z.B. unmittelbare Anbringung an einem Wandabschnitt eines Ofenraums des Ofens vorgesehen ist.

Die erfindungsgemäße Vorrichtung bietet den Vorteil, dass damit eine selbstsichernde Anbringung einer Trageinheit im Ofen möglich ist, die sich vergleichsweise platzsparend ausführen lässt. Die Anbringung der Trageinheit lässt sich derart lösbar ausführen, dass ein Entfernen der Trageinheit aus einer angebrachten Position vereinfacht und gegebenenfalls ohne erhöhten Kraftaufwand durchführbar ist. Gemäß der Erfindung umfasst das Hakenelement einen Querabschnitt, der von der Trageinheit seitlich abstehend angeordnet ist, und einen Hakenendabschnitt, der in einer Einbauposition vom Querabschnitt nach oben abgewinkelt ist, wobei der Querabschnitt zur Auflage auf einem unteren Randabschnitt der Einstecköffnung und der Hakenendabschnitt zur Anlage an einem von der Trageinheit abgewandten Oberflächenbereich an der Einstecköffnung vorgesehen sind. Der Hakenendabschnitt ist vorzugsweise länger nach oben erstreckt als ein Abstand des unteren Randabschnitts der Einstecköffnung zu einem oberen Randabschnitt, wodurch der Hakenendabschnitt in der Einbauposition oberhalb der Einstecköffnung an einer Außenseite z.B. des Wandabschnitts oder z.B. eines Anbringelements anliegen kann. Dabei kann der Hakenendabschnitt sich nach einem Einstecken an einer entgegengesetzten Seite einer Wandung mit der Einstecköffnung befinden, wogegen das übrige Tragelement sich an einer Innenseite der Wandung um die Einstecköffnung befindet. In einer angebrachten Position bietet eine Kontaktstelle, an der der Querabschnitt auf dem unteren Randabschnitt der Einstecköffnung aufliegt, ein Schwenklager, durch das der aufragende Hakenendabschnitt mit einem Drehmoment gegen die Außenseite der Wandung gedrückt wird, das z.B. durch eine Länge des Hakenendabschnitts bestimmt sein kann. Durch Haftreibungskräfte können dabei Tragkräfte zum Stützen der Trageinheit an anderen Stellen als der Kontaktstelle am unteren Randabschnitt übertragbar sein, wodurch eine vorteilhafte Kraftverteilung erreichbar ist. Entsprechende Haftreibungskräfte wirken außerdem einem Lösen des Hakenelements aus einer Eingesteckten Einbauposition entgegen.

Um zu vermeiden, dass in einer Einbauposition eine Berührungsstelle des Hakenendabschnitts an einem abgewandten Oberflächenabschnitt an der Einstecköffnung die Rolle eines Drehpunkts übernimmt und dadurch der Querabschnitt auf dem unteren Randabschnitt der Einstecköffnung verschiebbar ist, kann das Hakenelement einen Anschlagabschnitt aufweisen, der vom Querabschnitt nach unten abstehend angeordnet ist, wobei der Anschlagabschnitt zum Abstützen des Hakenelements an einem der Trageinheit zugewandten Oberflächenabschnitt an der Einstecköffnung vorgesehen ist. Ein Abstand zwischen dem Anschlagabschnitt und dem Hakenendabschnitt ist vorzugsweise an eine Materialstärke z.B. eines Wandabschnitts und z.B. eines Anbringelements an der Einstecköffnung angepasst.

Eine vorteilhafte Ausführung der Erfindung besteht darin, dass der Anschlagabschnitt ein vom Querabschnitt abgewinkelter Materialabschnitt ist. Dieser ermöglicht eine kostengünstige Herstellung, die sich einstückig ausbilden lässt und dadurch eine erhöhte Stabilität aufweisen kann. Beispielsweise kann eine Biegekante zumindest abschnittsweise entlang einer Längserstreckung des Querabschnitts folgen, wodurch der Querabschnitt zusätzlich verstärkt ist.

Das Hakenelement weist vorzugsweise einen Gegenabschnitt auf, der an einem vom Hakenendabschnitt entgegengesetzten Ende des Querabschnitts nach unten abgewinkelt ausgebildet ist. Mit dem Gegenabschnitt kann das Hakenelement an der Trageinheit angebracht und insbesondere befestigt sein. Der Gegenabschnitt kann dabei auch als Anschlagabschnitt vorgesehen und ausgebildet sein, wodurch eine kompakte Bauweise erreichbar ist.

Vorzugsweise ist der Anschlagabschnitt durch eine vertikal verlaufende Eckverbindung mit dem Gegenabschnitt verbunden. Dabei kann die Eckverbindung zum Beispiel eine Biegekante sein.

Erfindungsgemäß ist vorgesehen, dass am Hakenendabschnitt ein Vorsprung ausgebildet ist, der von einer Längsachse des Hakenendabschnitts in gleicher Richtung wie der Querabschnitt abstehend angeordnet ist. Ein Abstand zwischen einer Unterkante des Querabschnitts und einer Oberkante des Vorsprungs ist dabei vorzugsweise an einem vertikalen Durchmesser der Einstecköffnung angepasst, womit ein vertikales Bewegungsspiel des Hakenelements bezüglich der Einstecköffnung beschränkt werden kann. Damit lässt sich eine Anbringung der Trageinheit zusätzlich gegenüber lösenden Einwirkungen absichern, die z.B. bei einer Entnahme eines Gargutträgers auftreten können.

Eine bevorzugte Ausführung der Erfindung sieht vor, dass am Hakenelement ein beweglicher Rasthaken angeordnet ist, der in der Einbauposition am unteren Randabschnitt der Einstecköffnung unterhalb des Querabschnitts insbesondere lösbar einrastbar ist. Ein unbeabsichtigtes Lösen der Trageinheit aus einer Anbringung lässt sich dadurch zusätzlich erschweren. Vorzugsweise ist der bewegliche Rasthaken mit einem Betätigungshebel verbunden, mit dem sich der Rasthaken aus einer Verrastung insbesondere ohne zusätzliches Werkzeug lösen lässt.

Des Weiteren ist es bevorzugt, dass die Anbringmittel ein verschiebbar gelagertes Schiebeelement umfassen, mit dem eine Aussparung am Schiebeelement in eine Freigabeposition verschiebbar ist, in der die Aussparung dem Hakenelement einen Bewegungsspielraum zum Anbringen und zum Entfernen des Hakenelements bereitstellt, und mit dem die Aussparung in eine Sperrposition verschiebbar ist, durch die ein Entfernen des in die Einstecköffnung eingesteckten Hakenelements blockiert ist. Mit einer kinematische Blockierung eines Bewegungsspielraums des Hakenelements durch das Schiebeelement lassen sich zusätzliche Spannungen an den Anbringmitteln für eine Absicherung der Einbauposition vorteilhaft vermeiden.

Nachfolgend wird die Erfindung an einem Ausführungsbeispiel näher erläutert und mit Hilfe der Zeichnungen beschrieben. Es zeigen:
- Figur 1: eine perspektivische Ansicht einer Ofenmuffel mit einer erfindungsgemäßen Vorrichtung,
- Figur 2: einen Ausschnitt aus Figur 1,
- Figur 3: eine perspektivische Ansicht einer erfindungsgemäßen Vorrichtung,
- Figur 4: einen Ausschnitt aus Figur 3,
- Figur 5: eine Frontansicht einer erfindungsgemäßen Vorrichtung,
- Figur 6: eine Frontansicht einer erfindungsgemäßen Vorrichtung,
- Figur 7: eine Frontansicht einer erfindungsgemäßen Vorrichtung,
- Figur 8: eine Frontansicht einer erfindungsgemäßen Vorrichtung,
- Figur 9: eine perspektivische Ansicht einer Anbringseite einer erfindungsgemäßen Vorrichtung,
- Figur 10: eine Frontansicht einer erfindungsgemäßen Vorrichtung sowie
- Figur 11: eine Frontansicht einer erfindungsgemäßen Vorrichtung.

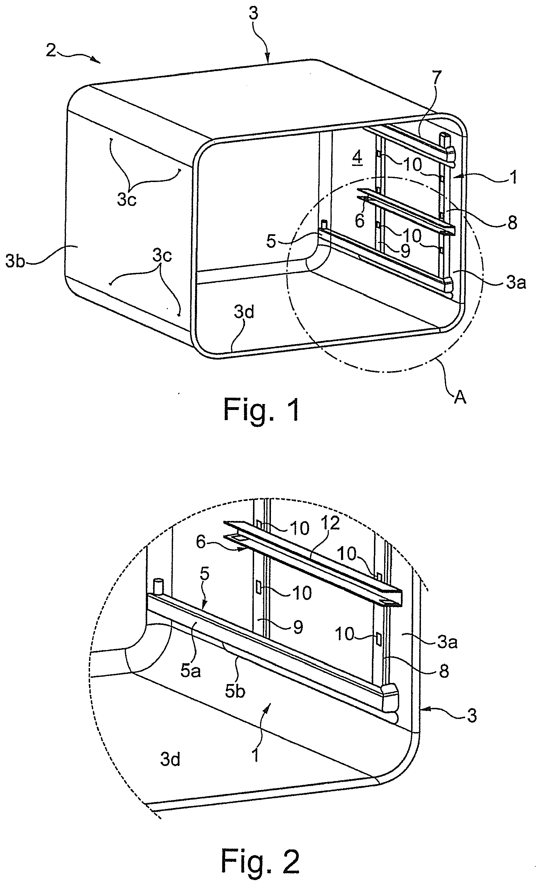

In den Figuren 1 bis 6 ist ein erstes Ausführungsbeispiel einer erfindungsgemäßen Vorrichtung 1 gezeigt. Dabei ist in Fig.1 von einem Ofen 2 eine Ofenmuffel 3 mit einem seitlichen Wandabschnitt 3a gezeigt, an deren Innenseite 4 die Vorrichtung 1 angebracht ist.

Die Vorrichtung 1 kann für den Wandabschnitt 3a mehrere - z.B. drei - Trageinheiten 5, 6 und 7 und Anbringmittel umfassen, mit denen sich die Trageinheiten 5, 6, 7 am Wandabschnitt 3a insbesondere lösbar anbringen lassen. Dabei gehören zu den Anbringmitteln z.B. eine vordere Anbringleiste 8 und eine hintere Anbringleiste 9, die für eine Anbringung an Anbringöffnungen 3c vorgesehen sind, die in Fig. 1 nur an einem Wandabschnitt 3b sichtbar sind.

An jeder der beiden Anbringleisten 8, 9 sind mehrere Einstecköffnungen 10 ausgebildet (Fig. 2) und derart angeordnet, dass jede der Trageinheiten 5, 6, 7 sich in waagrechter bzw. paralleler Lage in einer gewünschten Höhe bezüglich eines Bodens 3d der Ofenmuffel 3 am Wandabschnitt 3a anbringen lässt. Vorzugsweise umfasst die Vorrichtung 1 weitere Trageinheiten (nicht gezeigt) und Anbringmittel (nicht gezeigt) für den Wandabschnitt 3b, die z.B. spiegelbildlich zu den Trageinheiten 5, 6, 7 und den Anbringmitteln - z.B. 8 und 9 - aufgebaut sind.

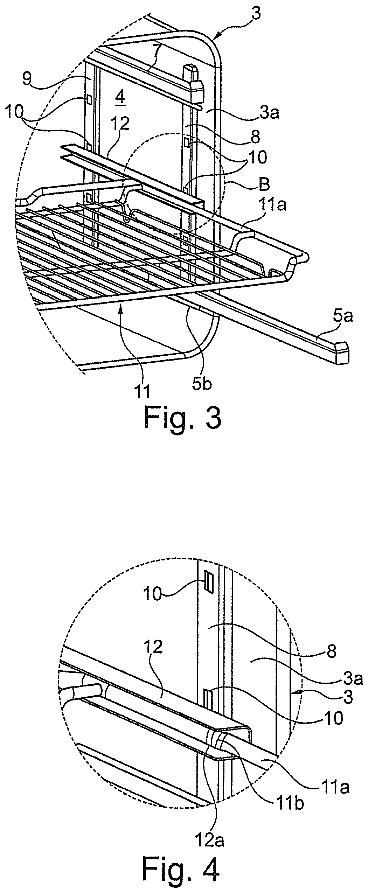

Die Trageinheiten 5, 6, 7 können unterschiedlicher Bauart sein. Beispielsweise kann die Trageinheit 5 ein Führungssystem mit mehreren, zueinander verschiebbar gelagerten Führungsschienen - z.B. 5a und 5b - sein, das gegebenenfalls als Vollauszug ausgebildet ist. Die Schiene 5b kann für eine Anbringung an den Tragleisten 8 und 9 vorgesehen sein. Die Trageinheit 6 kann eine U- bzw. C-förmige Profilleiste 12 umfassen, die als Gleitlager für einen Randbereich 11a eines Gargutträgers 11 vorgesehen ist. Dabei kann an der Profilleiste 12 z.B. eine Kerbe 12a - wie in Fig. 4 gezeigt - ausgebildet sein, an der sich eine Verdickung 11b am Rand 11a des Gargutträgers 11 arretieren lässt, um den Gargutträger in einer vorgegebenen z.B. ausgefahrenen Position gegen unbeabsichtigte Bewegungen zu sichern.

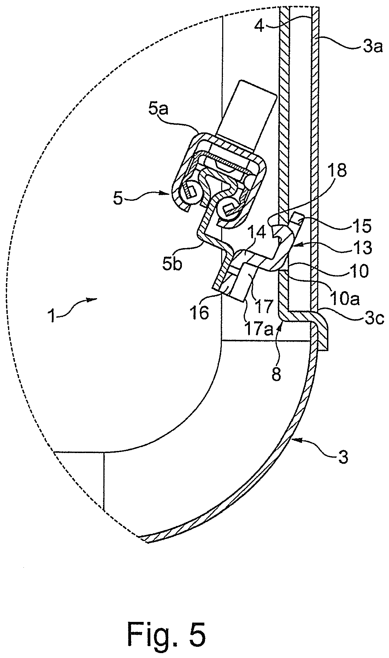

In Fig. 5 ist die Trageinheit 5 in einer vorgeschwenkten Stellung gezeigt, in der sie sich an einer Einstecköffnung 10 anbringen und lösen lässt. Die Schiene 5b ist für eine ortsfeste Anbringung an der Ofenmuffel 3 vorgesehen. Dafür ist an der Anbringöffnung 3c des Wandabschnitts 3a die Anbringleiste 8 mittels einer Steckverbindung angebracht. Die Anbringleiste 8 stellt hierbei die Einstecköffnung 10 zur Verfügung. An der Schiene 5b ein Hakenelement 13 angebracht, das für eine Steckverbindung an der Einstecköffnung 10 vorgesehen ist.

Das Hakenelement 13 weist einen Querabschnitt 14 auf, von dem an einem Ende ein Hakenendabschnitt 15 in eine erste Richtung abstehend abgewinkelt ist. Ein Gegenabschnitt 16 ist an einem entgegengesetzten Ende des Querabschnitts 14 in eine zweite Richtung, die der ersten Richtung vorzugsweise entgegengesetzt gerichtet ist, abstehend abgewinkelt. Dadurch sind der Hakenendabschnitt 15 und der Gegenabschnitt 16 bezüglich einer Längsachse des Querabschnitts 14 in einem Abstand voneinander angeordnet.

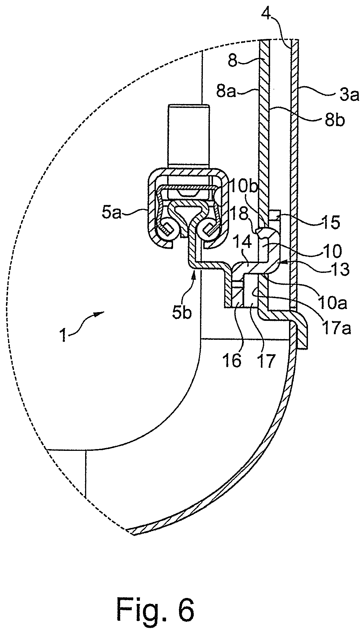

Am Gegenabschnitt 16 ist ein Anschlagabschnitt 17 derart abstehend abgewinkelt, dass eine dem Hakenendabschnitt 15 zugewandte Kante 17a des Anschlagabschnitts 17 einen verkürzten Abstand zum Hakenendabschnitt 15 im Vergleich zum Gegenabschnitt 16 aufweist. Vorzugsweise ist der verkürzte Abstand an eine Materialstärke der Anbringleiste 8 z.B. an einem unteren Randabschnitt 10a der Einstecköffnung angepasst und ist gleich oder vergleichsweise wenig größer als die besagte Materialstärke. Dadurch ist - entsprechend Fig. 6 - eine vergleichsweise genaue Positionierung des Hakenelements 13 in einer Einbauposition erreichbar, wobei der Querabschnitt 14 z.B. rechtwinklig zur Anbringleiste 8 und der Gegenabschnitt 16 sowie der Hakenendabschnitt 15 parallel zur Anbringleiste 8 insbesondere anliegend angeordnet sein können. Die Schiene 5a, die zum Auflegen eines Gargutträgers 11 vorgesehen ist, kann dabei in einem rechtwinklig vom Wandabschnitt 3a abstehenden maximalen Abstand angeordnet sein, wodurch eine erhöhte Funktionssicherheit beim Verschieben des Gargutträgers 11 erreichbar ist.

In Fig. 6 ist die Trageinheit 5 und das Hakenelement 13 in der bereits angesprochenen Einbauposition gezeigt, mit der die Trageinheit 5 stabil an der Anbringleiste 8 und damit am Wandabschnitt 3a der Ofenmuffel 3 angebracht ist. Das Erreichen der Einbauposition ist durch einen Vorsprung 18 am Hakenendabschnitt 15 zusätzlich vereinfacht. Bei einem Einstecken des Hakenendabschnitts 15 - wie z.B. in Fig. 5 gezeigt - kann eine günstige Einstecktiefe des Hakenendabschnitts durch ein Anschlagen des Vorsprungs 18 an einem oberen Randabschnitt 10b der Einstecköffnung erkennbar sein, wodurch der Anwender den Hinweis erhält, das Anbringen durch eine Schwenkbewegung fortzusetzen, bis insbesondere die Kante 17a an eine Innenseite 8a der Anbringleiste 8 stösst. In der Einbauposition gemäß Fig. 6 reicht der Vorsprung 18 in die Einstecköffnung und bewirkt in Verbindung mit dem Querabschnitt 14 außerdem vorteilhaft, dass z.B. bei einem Abnehmen eines Gargutträgers 11 von der Schiene 5a das Hakenelement 13 kaum oder gar kein Bewegungssspiel in vertikaler Richtung aufweist und somit ein ungewolltes Lösen bei einer Abnahme des Gargutträgers 11 relativ leicht vermeidbar ist.

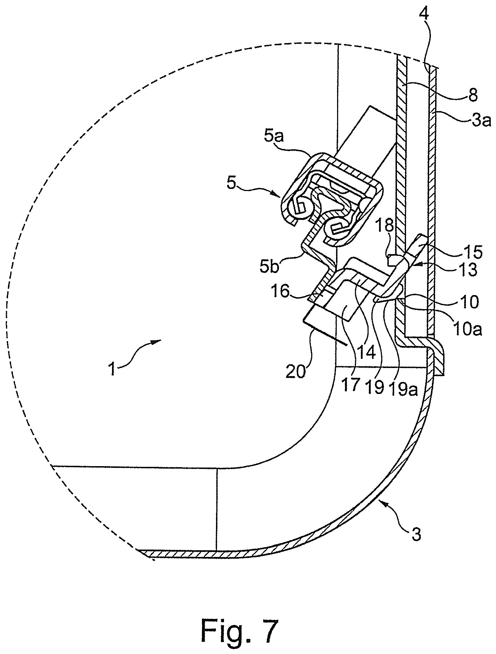

In den Figuren 7, 8 und 9 ist ein zweites Ausführungsbeispiel einer erfindungsgemäßen Vorrichtung 1 gezeigt. Dabei weist die Vorrichtung 1 alle Merkmale des vorhergehenden, in den Figuren 1 bis 6 gezeigten Ausführungsbeispiels auf, weshalb im Folgenden nur auf zusätzliche Eigenschaften eingegangen wird.

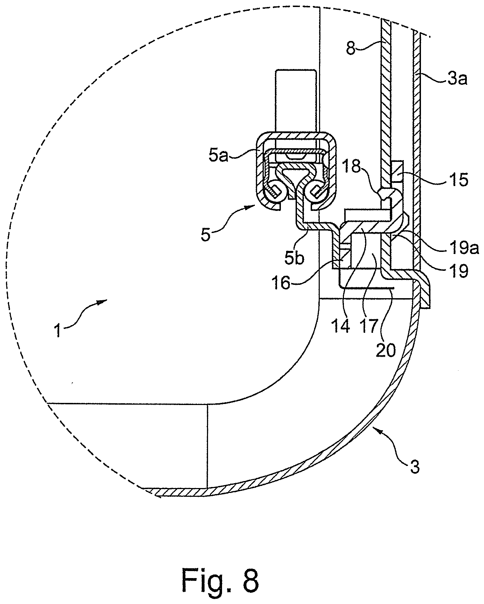

Um ein Hakenelement 13 nach einem Einstecken in eine Einstecköffnung 10 in einer Einbauposition gemäß Fig. 8 gegen eine lösende Schwenkbewegung zu sichern, ist seitlich am Hakenelement 13 ein Rasthaken 19 angeordnet. Der Rasthaken 19 ist so angeordnet, dass der Rasthaken einen unteren Randabschnitt 10a der Einstecköffnung 10 an einer Anbringleiste 8 hintergreifen kann, wenn das Hakenelement 13 eine Einbauposition wie in Fig. 8 erreicht hat. Der Rasthaken 19 kann am Hakenelement 13, z.B. am Gegenabschnitt 16 angebracht sein, wobei der Rasthaken 19 derart beweglich gegenüber dem Hakenelement 13 angebracht ist, dass sich der Rasthaken 19 in der Einbauposition anheben lässt, um ein Hintergreifen des unteren Randabschnitts 10a aufzuheben. Der Rasthaken kann z.B. mit einem Betätigungshebel 20 verbunden sein, mit dem sich der Rasthaken 19 für ein Lösen der Verrastung bewegen und insbesondere vom unteren Randabschnitt 10a anheben lässt. Der Rasthaken 19 kann bei einem Einschwenken der Trageinheit 5 mit dem Hakenelement 13 zur Anbringung vorteilhaft selbstständig am unteren Randabschnitt 10a der Einstecköffnung 10 einrasten, wenn an einem freistehenden Ende des Rasthakens 19 ein rampenförmiger Gleitabschnitt 19a ausgebildet ist.

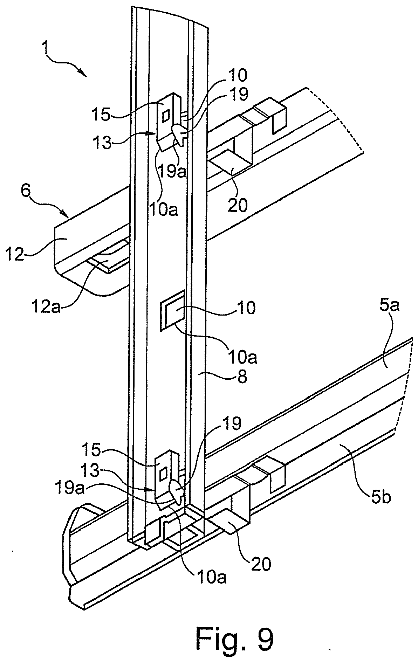

Wie in Fig. 9 gezeigt, kann das Hakenelement 19 gemeinsam mit dem Betätigungshebel 20 aus einem durchgehenden z.B. streifenförmigen elastischen Material zusammenhängend hergestellt sein, das als ein separat an den Trageinheiten 5 und 6 anbringbares Teil der Anbringmittel ausgebildet ist. Dadurch kann der Rasthaken 19 auch für eine Verrastung (nicht gezeigt) außerhalb der Einstecköffnung an den Trageinheiten 5, 6, 7 vorgesehen und angeordnet sein.

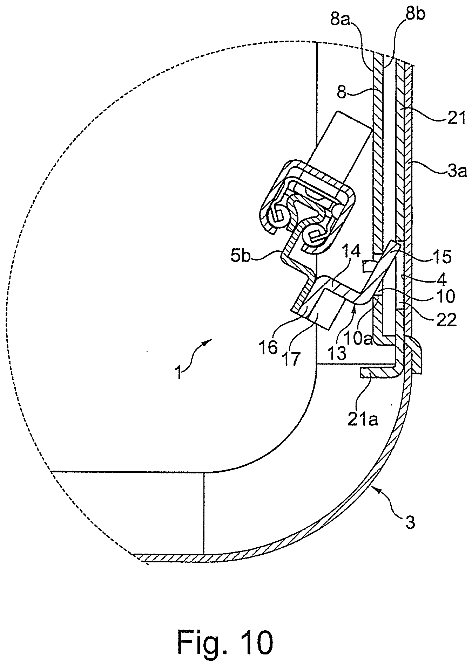

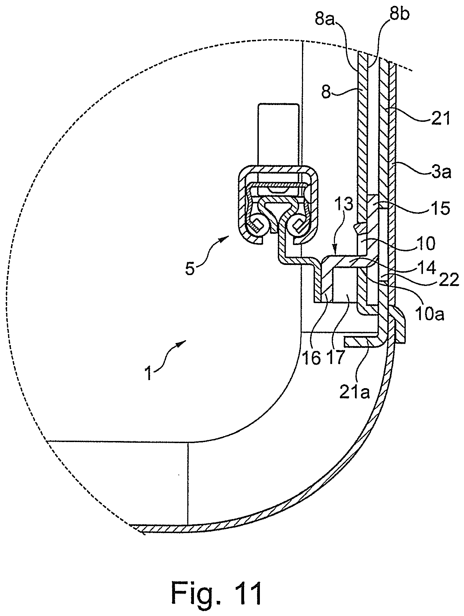

In den Figuren 10 und 11 ist ein drittes Ausführungsbeispiel einer erfindungsgemäßen Vorrichtung 1 gezeigt. Die Vorrichtung 1 ist ebenfalls eine Weiterentwicklung des in den Figuren 1 bis 6 gezeigten ersten Ausführungsbeispiels, weshalb auch hierzu im Folgenden nur Unterschiede beschrieben werden.

Um das Hakenelement 13 in einer eingesteckten Einbauposition gegen ein Lösen zu sichern, macht sich die Vorrichtung 1 die Tatsache zunutze, dass der Hakenendabschnitt 15 beim Anbringen oder Lösen einen Bewegungsspielraum benötigt, um eine an einer Außenseite 8b der Anbringleiste 8 anliegende Anbringstellung zu erreichen bzw. zu verlassen. Die Anbringleiste 8 ist grundsätzlich derart geformt und weist insbesondere bei Anbringung an einem Wandabschnitt 3a einer z.B. Ofenmuffel 3 einen solchen Abstand auf, dass der zum Anbringen und Lösen des Hakenelements 13 erforderliche Bewegungsspielraum bereitgestellt ist.

Die Vorrichtung 1 weist ein insbesondere plattenförmiges Schiebeelement 21 auf, das z.B. an der Anbringleiste 8 in z.B. vertikaler Richtung verschiebbar gelagert ist. An z.B. einer Unterseite der Anbringleiste 8 ragt das Schiebeelement mit einer z.B. abgewinkelten Betätigungslasche 21a hervor, mit der sich das Schiebeelement 21 in vertikaler Richtung verschieben lässt.

Das Schiebeelement 21 weist mehrere Aussparungen 22 auf, von denen jede jeweils einer der Einstecköffnungen 10 der Anbringleiste 8 zugeordnet und dementsprechend positioniert ist. Durch ein Verschieben des Schiebeelements 21 lässt sich die Aussparung 22 - wie in Fig. 10 gezeigt - derart bezüglich des Hakenelements 13 und der Einstecköffnung 10 anordnen, dass dem Hakenendabschnitt 15 der benötigte Bewegungsspielraum für eine Anbringung und für ein Entfernen des Hakenelements 13 zur Verfügung steht.

Wenn sich das Hakenelement 13 und insbesondere der Hakenendabschnitt 15 in einer an der Außenseite 8b der Anbringleiste 8 anliegenden Position gemäß Fig. 11 befindet, lässt sich das Schiebeelement 21 und insbesondere die Aussparung 22 so verschieben, dass Bewegungen, insbesondere Schwenkbewegungen des Hakenendabschnitts 15 blockiert sind und ein Entfernen des Hakenelements 13 unterbunden ist.

Die Aussparungen 22 können am Schiebeelement 21 derart ausgebildet sein, dass bei einer vorgegebenen Stellung des Schiebeelements 21 gegenüber den Einstecköffnungen 10 der Anbringleiste 8 die Hakenelemente 13 aller Trageinheiten 5, 6 und 7 lösbar sind. Außerdem können Aussparungen 22 am Schiebeelement 21 so gelegen sein, dass nur das Hakenelement 13 von z.B. genau einer der Trageinheiten 5, 6 oder 7 lösbar ist, indem der erforderliche Bewegungsspielraum durch die entsprechende Aussparung 22 zur Verfügung steht.

### Bezugszeichenliste:

- 1: Vorrichtung
- 2: Ofen
- 3: Ofenmuffel
- 3a: Wandabschnitt
- 3b: Wandabschnitt
- 3c: Anbringöffnungen
- 3d: Boden
- 4: Innenseite
- 5: Trageinheit
- 5a: Führungsschiene
- 5b: Führungsschiene
- 6: Trageinheit
- 7: Trageinheit
- 8: Anbringleiste (vordere)
- 8a: Oberflächenbereich
- 8b: Oberflächenbereich
- 9: Anbringleiste (hintere)
- 10: Einstecköffnungen
- 10a: Randabschnitt
- 10b: Randabschnitt
- 11: Gargutträger
- 11a: Randbereich
- 11b: Verdickung
- 12: Profilleiste
- 12a: Kerbe
- 13: Hakenelement
- 14: Querabschnitt
- 15: Hakenendabschnitt
- 16: Gegenabschnitt
- 17: Anschlagabschnitt
- 17a: Anschlagkante
- 18: Vorsprung
- 19: Rasthaken
- 19a: Gleitabschnitt
- 20: Betätigungshebel
- 21: Schiebeelement
- 21a: Betätigungslasche
- 22: Aussparung

## Patentansprüche

1. Vorrichtung (1) zur Auflage von Gargutträgern in einem Ofen (2) mit mindestens einer Trageinheit (5, 6, 7) zur Auflage eines Gargutträgers (11) und mit Anbringmitteln, mit denen die Trageinheit (5, 6, 7) im Ofen (2) an einem senkrechten Wandabschnitts (3a) des Ofens (2) anbringbar ist, wobei die Anbringmittel ein Hakenelement (13) umfassen, das von der Trageinheit (5, 6, 7) seitlich abstehend und nach oben ragend ausgebildet ist, wobei das Hakenelement (13) zum Einstecken durch eine Einstecköffnung (10) am senkrechten Wandabschnitt (3a) mit einer anhebenden und zur Einstecköffnung (10) hin einschwenkenden Bewegung vorgesehen ist, um auf einem unteren Randabschnitt (10a) der Einstecköffnung (10) aufzuliegen, wobei das Hakenelement (13) einen Querabschnitt (14), der von der Trageinheit (5, 6, 7) seitlich abstehend angeordnet ist, und einen Hakenendabschnitt (15) umfasst, der in einer Einbauposition vom Querabschnitt (14) nach oben abgewinkelt ist, wobei der Querabschnitt (14) zur Auflage auf dem unteren Randabschnitt (10a) der Einstecköffnung (10) und der Hakenendabschnitt (15) zur Anlage an einem von der Trageinheit (5, 6, 7) abgewandten Oberflächenbereich (8b) an der Einstecköffnung (10) vorgesehen sind,
**dadurch gekennzeichnet, dass** am Hakenendabschnitt (15) ein Vorsprung (18) ausgebildet ist, der von einer Längsachse des Hakenendabschnitts (15) in gleicher Richtung wie der Querabschnitt (14) abstehend angeordnet ist, wobei ein Abstand zwischen einer Unterkante des Querabschnitts (14) und einer Oberkante des Vorsprungs (18) an einen vertikalen Durchmesser der Einstecköffnung (10) angepasst ist.

2. Vorrichtung (1) nach Anspruch 1, **dadurch gekennzeichnet, dass** das Hakenelement (13) einen Anschlagabschnitt (17) aufweist, der vom Querabschnitt (14) nach unten abstehend angeordnet ist, wobei der Anschlagabschnitt (17) zum Abstützen des Hakenelements (13) an einem der Trageinheit (5, 6, 7) zugewandten Oberflächenbereich (8a) an der Einstecköffnung (10) vorgesehen ist.

3. Vorrichtung (1) nach Anspruch 2, **dadurch gekennzeichnet, dass** der Anschlagabschnitt (17) ein vom Querschnitt (14) abgewinkelter Materialabschnitt ist.

4. Vorrichtung (1) nach einem der Ansprüche 2 und 3, **dadurch gekennzeichnet, dass** das Hakenelement (13) einen Gegenabschnitt (16) aufweist, der an einem vom Hakenendabschnitt (15) entgegengesetzten Ende des Querabschnitts (14) nach unten abgewinkelt ausgebildet ist.

5. Vorrichtung (1) nach Anspruch 4, **dadurch gekennzeichnet, dass** das Hakenelement (13) am Gegenabschnitt (16) fest mit der Trageinheit (5, 6, 7) verbunden ist.

6. Vorrichtung (1) nach einem der Ansprüche 4 und 5, **dadurch gekennzeichnet, dass** der Anschlagabschnitt (17) durch eine vertikal verlaufende Eckverbindung mit dem Gegenabschnitt (16) verbunden ist.

7. Ofen (2) mit einer Vorrichtung (1) nach einem der vorgenannten Ansprüche.

## Claims

1. Device (1) for supporting food carriers in an oven (2) comprising at least one support unit (5, 6, 7) for supporting a food carrier (11) and attachment means, by means of which the support unit (5, 6, 7) can be attached in the oven (2) onto a vertical wall section (3a) of the oven (2), wherein the attachment means comprise a hook element (13) which is designed to protrude laterally from the support unit (5, 6, 7) and upwards, wherein the hook element (13) for inserting through an insertion opening (10) on the vertical wall section (3a) is provided with a lifting movement pivoting towards the insertion opening (10) in order to bear on a lower edge section (10a) of the insertion opening (10),
wherein the hook element (13) comprises a transverse section (14), which is arranged extending laterally from the support unit (5, 6, 7) and comprises a hook end section (15), which in its installed position is angled upwards from the transverse section (14), wherein the transverse section (14) for supporting on the lower edge section (10a) of the insertion opening (10) and the hook end section (15) are provided for bearing on a surface area (8b) facing away from the support unit (5, 6, 7) on the insertion opening (10), **characterised in that**
on the hook end section (15) a projection (18) is formed which is arranged extending from a longitudinal axis of the hook end section (15) in the same direction as the transverse section (14), wherein the distance between a lower edge of the transverse section (14) and an upper edge of the projection (18) are adjusted to a vertical diameter of the insertion opening (10).

2. Device (1) according to claim 1, **characterised in that** the hook element (13) comprises a stop section (17) which is arranged to extend downwards from the transverse section (14), wherein the stop section (17) is provided for supporting the hook element (13) on a surface area (8a) facing the support unit (5, 6, 7) on the insertion opening (10).

3. Device (1) according to claim 2, **characterised in that** the stop section (17) is a section of material at an angle to the transverse section (14).

4. Device (1) according to any one of claims 2 and 3, **characterised in that** the hook element (13) has a counter section (16), which at an end of the transverse section (14) opposite the hook end section (15) is designed to be angled downwards.

5. Device (1) according to claim 4, **characterised in that** the hook element (13) is connected securely on the counter section (16) to the support unit (5, 6, 7).

6. Device (1) according to any one of claims 4 and 5, **characterised in that** the stop section (17) is connected by a vertical corner connection to the counter section (16).

7. Oven (2) comprising a device (1) according to any one of the preceding claims.

## Revendications

1. Dispositif (1) pour poser des supports de cuisson dans un four (2), avec au moins une unité support (5, 6, 7) pour poser un support de cuisson (11) et des moyens de mise ne place avec lesquels l'unité support (5, 6, 7) peut être mise en place dans le four (2) sur une partie de paroi verticale (3a) du four (2), les moyens de mise en place comprenant un élément crochet (13) qui s'écarte latéralement de l'unité support (5, 6, 7) et qui saille vers le haut, l'élément crochet (13) étant prévu pour être enfiché à travers une ouverture d'enfichage (10) réalisée sur la partie de paroi verticale (3a) par un mouvement d'entrée par pivotement en soulevant en direction de l'ouverture d'enfichage (10) en vue de reposer sur une partie d'arête inférieure (10a) de l'ouverture d'enfichage (10), l'élément crochet (13) comprenant une partie transversale (14) disposée en s'écartant latéralement de l'unité support (5, 6, 7) et une partie d'extrémité de crochet (15) qui, dans une position de montage, est pliée vers le haut à partir de la partie transversale (14), la partie transversale (14) étant prévue pour reposer sur la partie d'arête inférieure (10a) de l'ouverture d'enfichage (10) et la partie d'extrémité de crochet (15) étant prévue pour prendre appui sur une partie de surface (8b) de l'ouverture d'enfichage opposée à l'unité support (5, 6, 7), **caractérisé en ce qu'**une saillie (18) est formée sur la partie d'extrémité de crochet (15), laquelle saillie est disposée en s'écartant d'un axe longitudinal de la partie d'extrémité de crochet (15) et dans la même direction que la partie transversale (14), une distance entre une arête inférieure de la partie transversale (14) et une arête supérieure de la saillie (18) étant adaptée à un diamètre vertical de l'ouverture d'enfichage (10).

2. Dispositif (1) selon la revendication 1, **caractérisé en ce que** l'élément crochet (13) est muni d'une partie de butée (17) disposée en s'écartant de la partie transversale (14) vers le bas, la partie de butée (17) étant prévue pour que l'élément crochet (13) prenne appui sur une partie de surface (8a) de l'ouverture d'enfichage (10) dirigée vers l'unité support (5, 6, 7).

3. Dispositif (1) selon la revendication 2, **caractérisé en ce que** la partie de butée (17) est une partie de matériau pliée de la partie latérale (14).

4. Dispositif (1) selon la revendication 2 ou 3, **caractérisé en ce que** l'élément crochet (13) est muni d'une partie opposée (16) formée par pliage vers le bas sur une extrémité de la partie transversale (14) opposée à la partie d'extrémité de crochet (15).

5. Dispositif (1) selon la revendication 4, **caractérisé en ce que** l'élément crochet (13) est relié fixement à l'unité support (5, 6, 7) par la partie opposée (16).

6. Dispositif (1) selon l'une des revendications 4 et 5, **caractérisé en ce que** la partie de butée (17) est reliée à la partie opposée (16) par une liaison d'angle s'étendant verticalement.

7. Four (2) avec un dispositif (1) selon l'une des revendications précédentes.
